# EUROPÄISCHE PATENTSCHRIFT

(11) **EP 3 158 465 B1**
(45) Veröffentlichungstag und Bekanntmachung des Hinweises auf die Patenterteilung: **16.09.2020**
(21) Anmeldenummer: 15724517.6
(22) Anmeldetag: 22.05.2015
(51) Int. Cl.: H04L 29/08, H04W 84/18, H04M 1/725, H04W 24/02, H04W 76/20

(54) **VERFAHREN, VORRICHTUNG UND SYSTEM ZUM AUFBAU UND ZUM BETRIEB EINES DRAHTLOSEN NETZWERKS**
METHOD, DEVICE, AND SYSTEM FOR ESTABLISHING AND OPERATING A WIRELESS NETWORK
PROCÉDÉ, DISPOSITIF ET SYSTÈME DE MISE EN PLACE ET D'EXPLOITATION D'UN RÉSEAU SANS FIL

(30) Priorität: 20.06.2014 DE 102014009242
(43) Veröffentlichungstag der Anmeldung: 26.04.2017
(73) Patentinhaber: WABCO GmbH, 30453 Hannover (DE)
(72) Erfinder: DIECKMANN, Thomas, 30982 Pattensen (DE); GLAVINIC, Andelko, 31157 Sarstedt (DE); HÖWING,Frank, 38300 Wolfenbüttel (DE); KÜHNE, Sebastian, 31157 Sarstedt (DE); LAUDE, Ulf, 29313 Hambühren (DE); WOLF, Thomas, 30890 Barsinghausen (DE)
(74) Vertreter: Lauerwald, Jörg
(86) Internationale Anmeldenummer: PCT/EP2015/001045
(87) Internationale Veröffentlichungsnummer: WO 2015/192936

(56) Entgegenhaltungen:
- WO-A1-2012/037666
- WO-A2-2005/011182
- DE-A1-102012 012 565
- US-A1- 2010 241 857

## Beschreibung

Die Erfindung betrifft ein Verfahren zum Aufbau und zum Betrieb eines drahtlosen Netzwerks. Weiterhin betrifft die Erfindung die Verwendung des Verfahrens sowie ein System für den Aufbau und Betrieb eines drahtlosen Netzwerks und schließlich ein elektronisches Steuergerät.

Beim Betrieb eines Nutzfahrzeugs fallen Daten an, die einem Fahrer in seiner Fahrerkabine auf Anzeigeinstrumenten oder anderen Ausgabegeräten zur Verfügung gestellt werden. Beispielsweise erhält der Fahrer eines Lastkraftwagens mit Luftfederung und elektronischem Bremssystem neben Angaben zur Geschwindigkeit und Motordrehzahl auch Informationen zum Systemdruck (Druck im Bremssystem), zur Achslast (über Balgdrucksensoren) zum Abstand zu rückwärtigen Hindernissen (über Näherungssensoren) usw. Die Daten werden teilweise unmittelbar an die Anzeigeinstrumente in der Fahrerkabine übermittelt, zum Teil über ein fahrzeugeigenes Datenbussystem, etwa ein CAN-Bussystem.

In einem Lastzug, bestehend aus mehreren Fahrzeugeinheiten, nämlich aus Zugmaschine und einem oder mehreren Anhängefahrzeugen, können Daten der Anhängefahrzeuge über genormte Schnittstellen zum Zugfahrzeug weitergeleitet werden, etwa über das CAN-Bussystem, einem Powerline-Adapter oder auf andere Weise. Voraussetzung ist eine entsprechende technische Ausstattung der Zugmaschine und der Anhängefahrzeuge. Typischerweise werden die Daten in einem elektronischen Steuergerät zusammengeführt und dem Datenbussystem zur Verfügung gestellt. Das Steuergerät muss eine entsprechende Schnittstelle für das Datenbussystem aufweisen. Das in europaweit verbreitete CAN-Datenbussystem lässt nur die Weitergabe spezifizierter Daten zu. Spezielle Daten, die nur in einem bestimmten Fahrzeugtyp anfallen und die noch nicht für den CAN-Datenbus spezifiziert sind, werden nicht übertragen und sind somit für den Fahrer in seiner Fahrerkabine nicht ablesbar. Ein zusätzlicher Kommunikationsweg zwischen Fahrer und der interessierenden Fahrzeugeinheit ist erforderlich.

Oftmals sollen Nutzfahrzeuge auch nach dem Abstellen Aktionen ausführen und/oder dem Fahrer oder einer anderen Bedienungsperson Informationen zur Verfügung stellen. Dabei hält sich die Bedienungsperson vorzugsweise außerhalb des Fahrzeugs auf. Sinnvoll ist eine Kommunikationsmöglichkeit, ohne dass sich die Bedienungsperson hierfür in der Fahrerkabine aufhalten muss.

Inzwischen weit verbreitet sind mobile Kommunikationsgeräte wie Smartphones, Tablet-PC's und andere Kleincomputer mit der Möglichkeit eine drahtlose Verbindung zur Kommunikation aufzubauen und zu nutzen, beispielsweise auch per WLAN (Wireless Local Area Network). Bei entsprechender technischer Ausstattung eines Fahrzeugs könnte die Bedienungsperson mit dem Smartphone eine Verbindung zum Fahrzeug herstellen und Informationen erhalten bzw. Funktionen im Fahrzeug ausführen. Erforderlich ist zuvor der Aufbau einer drahtlosen Verbindung zwischen dem Smartphone und dem Fahrzeug, wobei sichergestellt werden sollte, dass nur autorisierte Bedienungspersonen eine Verbindung herstellen können. Sofern Funktionen des Fahrzeugs angesprochen werden sollen, ist es sinnvoll, wenn nur eine Bedienungsperson Zugriff auf das Fahrzeug hat. Anderenfalls können einander widersprechende Aufrufe von Funktionen erfolgen.

Aus der DE 10 2012 012 565 A1 ist es bekannt, ein Smartphone mit einer Kommunikationseinheit eines Fahrzeugs per WLAN zu koppeln. Zum Aufbau und zur Authentifizierung der WLAN-Verbindung werden die hierfür erforderlichen Daten (Netzwerkname, Netzwerkschlüssel, Passwort) per USB-Kabel, NFC oder als QR-Code von der Kommunikationseinheit des Fahrzeugs zum Smartphone übertragen. Die Bedienungsperson muss die Daten nicht mehr in das Smartphone eintippen. In der Schrift angesprochen ist auch die Nutzung einer drahtlosen Verbindung zwischen Smartphone und Kommunikationseinheit des Fahrzeugs per Bluetooth. Die zuvor verwendeten Abkürzungen (WLAN, USB, NFC, QR-Code, Bluetooth) und weitere sind in der genannten DE 10 2012 012 565 A1 erläutert.

Die Verwendung eines QR-Codes zur Authentifizierung der Bluetooth-Verbindung zwischen einer Kommunikationseinheit eines Fahrzeugs und dem Smartphone einer Bedienungsperson ist auch in der US 2010/0241857 A1 offenbart.

Die Schriften WO 2012/037666 A1 und WO 2005/011182 A2 offenbaren Verfahren zum Aufbau und Betrieb eines drahtlosen Netzwerkes.

Aufgabe der vorliegenden Erfindung ist die Schaffung eines Verfahrens zum Aufbau und zum Betrieb eines drahtlosen Netzwerks mit wenigstens zwei Kommunikationseinheiten und einer weiteren mobilen Kommunikationseinheit.
Ein erfindungsgemäßes Verfahren zum Aufbau und Betrieb eines drahtlosen Netzwerks mit wenigstens einer ersten Kommunikationseinheit, einer zweiten Kommunikationseinheit und einer mobilen Kommunikationseinheit weist die Merkmale des Anspruchs 1 auf. Vorgesehen sind folgende Schritte:
a) die erste Kommunikationseinheit und die zweite Kommunikationseinheit sind jeweils als Server konfiguriert und die mobile Kommunikationseinheit ist als Client konfiguriert,
b) die mobile Kommunikationseinheit erfasst Verbindungsaufbau-Daten der beiden Kommunikationseinheiten,
c) von der mobilen Kommunikationseinheit wird eine drahtlose Verbindung zur ersten Kommunikationseinheit hergestellt.
d) die erste Kommunikationseinheit erhält von der mobilen Kommunikationseinheit über die drahtlose Verbindung eine Anweisung zur Konfiguration als Client der zweiten Kommunikationseinheit, hierzu übergibt die mobile Kommunikationseinheit die Verbindungsaufbau-Daten der zweiten Kommunikationseinheit an die erste Kommunikationseinheit,
e) spätestens danach wird von der mobilen Kommunikationseinheit eine drahtlose Verbindung zur zweiten Kommunikationseinheit hergestellt.

Die erste und zweite Kommunikationseinheit sind vorzugsweise Bestandteile größerer mobiler Einheiten, beispielsweise von Fahrzeugen, die zeitweise miteinander in Verbindung stehen. Mit dem erfindungsgemäßen Verfahren ist es möglich über die mobile Kommunikationseinheit mit beiden Kommunikationseinheiten zeitgleich zu kommunizieren, obwohl die erste und die zweite Kommunikationseinheit zunächst als Server konfiguriert sind und deshalb nur wahlweise ansprechbar sind. Die mobile Kommunikationseinheit vermittelt eine Client-Server-Verbindung zwischen der ersten Kommunikationseinheit als Client und der zweiten Kommunikationseinheit als Server. Hierzu überträgt die mobile Kommunikationseinheit die Verbindungsaufbau-Daten der zweiten Kommunikationseinheit an die erste Kommunikationseinheit und konfiguriert Letztere um vom Server zum Client. Dazu überträgt die mobile Kommunikationseinheit entsprechende Steuerbefehle an die erste Kommunikationseinheit. Die Fähigkeit einer Kommunikationseinheit wahlweise Client oder Server zu sein, ist beispielsweise aus dem Mobilfunkbereich bekannt. So können moderne Mobiltelefone wahlweise als WLAN-Client konfiguriert sein oder als WLAN-Hot-Spot für mobile Computer, nämlich für das sogenannte "Tethering". In dem erfindungsgemäßen Verfahren gibt die erste Kommunikationseinheit ihre ursprüngliche Server-Eigenschaft auf, schaltet das eigene Netzwerk ab und wählt sich dann als Client in das Netzwerk der zweiten Kommunikationseinheit ein. Anschließend kann die mobile Kommunikationseinheit in ein und demselben Netzwerk (der zweiten Kommunikationseinheit) auf die erste und die zweite Kommunikationseinheit zugreifen.

Nach einem weiteren Gedanken der Erfindung ist vorgesehen, dass nach einem Abriss der drahtlosen Verbindung zwischen der ersten Kommunikationseinheit als Client und der zweiten Kommunikationseinheit als Server die erste Kommunikationseinheit ihren Zustand als Client beendet und als Server neu startet. Dadurch ist sichergestellt, dass im Fehlerfall oder bei beabsichtigter räumlicher Trennung der beiden Kommunikationseinheiten voneinander auch die erste Kommunikationseinheit wieder ein Netzwerk aufspannt und als Server von einem Client ansprechbar ist.

Nach einem weiteren Gedanken der Erfindung ist vorgesehen, dass die mobile Kommunikationseinheit nach dem Erfassen der Verbindungsaufbau-Daten der zweiten Kommunikationseinheit eine Verbindung zur zweiten Kommunikationseinheit aufbaut. Insbesondere sollen die Verbindungsaufbau-Daten, die Aktivität und der Status der zweiten Kommunikationseinheit als Server überprüft werden, bevor die erste Kommunikationseinheit angesprochen wird.

Nach einem weiteren Gedanken der Erfindung ist vorgesehen, dass die Client-Server-Verbindungen WLAN-Verbindungen nach der Norm IEEE-802.11 sind, mit dem Server als Access-Point. Einbezogen sind auch bereits vorhandene Erweiterungen der Norm, etwa 802.11 b/g/n/ac sowie zukünftig noch folgende Erweiterungen. Die WLAN-Technik nach der genannten Norm ist ausgereift und die weiter oben beschriebenen Merkmale und Eigenschaften stehen zur Verfügung.

Nach einem weiteren Gedanken der Erfindung kann es sich bei den Client-Server-Verbindungen auch um Bluetooth-Verbindungen handeln, mit dem Server als Master. Die Clients des Netzwerks fungieren dann als sogenannte Slaves der Bluetooth-Verbindungen. Auch mit einem derart aufgebauten Netzwerk sind Zugriffe auf die beiden Kommunikationseinheiten möglich.

Nach einem weiteren Gedanken der Erfindung ist vorgesehen, dass die Verbindungsaufbau-Daten eine Kennung der zugehörigen Kommunikationseinheit umfassen und insbesondere auch ein Passwort und/oder Angaben zur Verschlüsselung. Es sollen möglichst alle Daten als Verbindungsaufbau-Daten bereitgehalten werden, die für den Aufbau der drahtlosen Client-Server-Verbindung erforderlich sind. Beim Aufbau einer WLAN-Verbindung zählen dazu beispielsweise eine Netzwerkkennung SSID, ein Netzwerkpasswort und Angaben zur Verschlüsselung. Analoge Daten werden für eine Bluetooth-Verbindung benötigt.

Nach einem weiteren Gedanken der Erfindung ist vorgesehen, dass die Verbindungsaufbau-Daten zumindest einer der beiden Kommunikationseinheiten als optisch erkennbares Muster bereitgehalten und von der mobilen Kommunikationseinheit gelesen werden, insbesondere als QR-Code, Data-Matrix-Code oder als Strich-Code. Die Verbindungsaufbau-Daten können so von einer Kamera oder einer anderen optischen Erfassungseinrichtung der mobilen Kommunikationseinheit gelesen und mit einer entsprechenden Software ausgewertet werden. Eine manuelle Eingabe der Daten in die mobile Kommunikationseinheit ist nicht erforderlich.

Erfindungsgemäß können die Verbindungsaufbau-Daten als per Funk übertragbare oder abrufbare Daten bereitgehalten und von der mobilen Kommunikationseinheit gelesen werden, insbesondere zur Übertragung durch WPS, NFC, Bluetooth oder RFID. Die mobile Kommunikationseinheit weist dann entsprechende technische Mittel zum Abrufen der Verbindungsaufbau-Daten auf. Bei WPS handelt es sich um eine bekannte Funktion zur Vereinfachung des Aufbaus von WLAN-Verbindungen. NFC ist eine drahtlose Kurzstreckenübertragung per Funk. RFID bezieht sich auf Funketiketten, die vorzugsweise ohne eigene Energie, also insbesondere passiv auslesbar sind.

Im Rahmen der Erfindung liegt auch eine Verwendung des beschriebenen Verfahrens für den Aufbau und den Betrieb eines drahtlosen Netzwerks zwischen Fahrzeugen und einer mobilen Kommunikationseinheit, wobei die erste Kommunikationseinheit einer ersten Fahrzeugeinheit und die zweite Kommunikationseinheit einer zweiten Fahrzeugeinheit zugeordnet ist. Insbesondere sind Fahrzeuge gemeint, die zeitweise miteinander verbunden werden sollen, etwa Zugmaschine und Anhängefahrzeug oder erstes Anhängefahrzeug und zweites Anhängefahrzeug innerhalb eines Lastzuges.

Mit der erfindungsgemäßen Verwendung ist es erstmals möglich ein drahtloses Fahrzeugnetzwerk aufzubauen, an dem mindestens zwei Fahrzeuge einerseits und eine mobile Kommunikationseinheit vorzugsweise außerhalb der Fahrzeuge andererseits miteinander kommunizieren können. Durch die Client-Server-Konfiguration können mittels der mobilen Kommunikationseinheit beide Fahrzeuge einzeln oder gemeinsam angesprochen werden. Die Fahrzeuge können gesteuert werden. Es können Daten aus den Fahrzeugen abgefragt werden.

Gegenstand der Erfindung ist auch ein System für den Aufbau und Betrieb eines drahtlosen Netzwerks, mit wenigstens einer ersten Kommunikationseinheit, welcher Verbindungsaufbau-Daten zugeordnet sind, einer zweiten Kommunikationseinheit, welcher Verbindungsaufbau-Daten zugeordnet sind, und einer mobilen Kommunikationseinheit, welche eine Funktion zum Lesen von Verbindungsaufbau-Daten aufweist, wobei zumindest die erste Kommunikationseinheit wahlweise als Server oder Client im Netzwerk betreibbar ist, wobei die zweite Kommunikationseinheit zumindest als Server im Netzwerk betreibbar ist, wobei die den beiden Kommunikationseinheiten zugeordneten Verbindungsaufbau-Daten von der mobilen Kommunikationseinheit lesbar sind, wobei mittels der mobilen Kommunikationseinheit als Client und unter Verwendung der Verbindungsaufbau-Daten der ersten Kommunikationseinheit eine drahtlose Verbindung zur ersten Kommunikationseinheit als Server herstellbar ist, wobei von der mobilen Kommunikationseinheit als Client und unter Verwendung der Verbindungsaufbau-Daten der zweiten Kommunikationseinheit die erste Kommunikationseinheit zum Client der als Server betriebenen zweiten Kommunikationseinheit umkonfigurierbar ist, und wobei von der mobilen Kommunikationseinheit als Client eine Verbindung zur als Server betriebenen zweiten Kommunikationseinheit herstellbar ist. Im Rahmen dieses Systems ist zumindest die erste Kommunikationseinheit wahlweise als Server oder Client im Netzwerk betreibbar, vorzugsweise auch die zweite Kommunikationseinheit. Zumindest soll aber die zweite Kommunikationseinheit als Server im Netzwerk vorgesehen sein. Die Zuordnungen "erste" und "zweite" sind willkürlich gewählt und dienen nur der Unterscheidung der beiden Kommunikationseinheiten neben der mobilen Kommunikationseinheit.

Erfindungsgemäß können die erste Kommunikationseinheit einem ersten Steuergerät einer ersten Fahrzeugeinheit und die zweite Kommunikationseinheit einem zweiten Steuergerät einer zweiten Fahrzeugeinheit zugeordnet sein. Das System beschreibt dann ein spezielles Fahrzeugnetzwerk, welchem zusätzlich eine mobile Kommunikationseinheit als Client zugeordnet ist. Vorzugsweise handelt es sich bei den beiden Fahrzeugeinheiten um eine Zugmaschine und ein Anhängefahrzeug. Es können aber auch andere Fahrzeugtypen und Fahrzeugtypkombinationen vorgesehen sein, auch mehr als zwei Fahrzeuge.

Erfindungsgemäß kann es sich bei der mobilen Kommunikationseinheit um einen portablen Computer handeln. Vorzugsweise ist die mobile Kommunikationseinheit ein Mobiltelefon nach Art eines Smartphone oder ein Tablet-Computer, beide insbesondere wenigstens mit WLAN-Funktion oder Bluetooth-Funktion. Diese Funktionen sind bei Smartphones und Tablet-Computern bereits üblich. Zusätzlich ist eine geeignete Software vorhanden, die beispielsweise von einem Anbieter des Systems als App zum Herunterladen (von der Internetseite des Anbieters) und Installieren angeboten wird. Die Programmierung einer derartigen Software ist nach Vorgabe der genannten Funktionen möglich.

Erfindungsgemäß kann die mobile Kommunikationseinheit einen Scanner oder eine Kamera mit einer Software zum Auswerten von Bildern aufweisen, insbesondere eine Funktion zum Lesen von QR-Codes, Data-Matrix-Codes oder StrichCodes. Üblicherweise sind Smartphones und Tablet-Computer mit einer Kamera ausgestattet. In Verbindung mit einem Software-Modul zum Lesen von QR-Codes oder anderen standardisierten, optisch lesbaren Informationen kann das Smartphone die genannten Aufgaben erfüllen.

Vorteilhafterweise ist die mobile Kommunikationseinheit WLAN-fähig oder Bluetooth-fähig. Auch diese Eigenschaften gehören inzwischen zur Standardausstattung eines Smartphone.

Gegenstand der Erfindung ist auch ein elektronisches Steuergerät für die Verwendung in einem erfindungsgemäßen System, mit einer Kommunikationseinheit, welche wahlweise als Client oder Server für eine drahtlose Client-Server-Verbindung konfigurierbar ist. Vorzugsweise ist das Steuergerät mit einer Schnittstelle für ein Datenbus-System versehen, insbesondere für ein CAN-Bussystem. Fahrzeuge europäischer Hersteller weisen in den allermeisten Fällen ein CAN-Bussystem zur Übertragung von Daten und Anweisungen innerhalb des Fahrzeugs auf. Auch andere Datenbus-Systeme sind aber angesprochen. Moderne Nutzfahrzeuge sind mit einer Reihe von elektronischen Steuergeräten ausgestattet und kommunizieren miteinander über das Datenbus-System, beispielsweise ein Motor-Steuergerät und ein Bremsen-Steuergerät (eines elektronischen Bremssystems). Vorgesehen ist hier ein elektronisches Steuergerät mit einer Kommunikationseinheit, vorzugsweise in einem Fahrzeug.

Auch eine Änderung der Konfiguration ist möglich. Hierzu sind vorzugsweise folgende Schritte vorgesehen:
a) mittels der mobilen Kommunikationseinheit wird die Client-Server-Verbindung von der ersten Kommunikationseinheit zur zweiten Kommunikationseinheit beendet, etwa durch Anweisung an Client oder Server;
b) die erste Kommunikationseinheit registriert das Verbindungsende, fährt herunter in einen Zustand ohne Client- oder Server-Eigenschaft und fährt wieder hoch in einen Zustand mit Server-Eigenschaft;
c) die zweite Kommunikationseinheit bleibt in ihrem Server-Modus;
d) die mobile Kommunikationseinheit übergibt nun die Verbindungsaufbau-Daten der ersten Kommunikationseinheit an die zweite Kommunikationseinheit und veranlasst diese zum Herunterfahren und Neustarten als Client der ersten Kommunikationseinheit;
e) spätestens danach nimmt die mobile Kommunikationseinheit als Client mit der ersten Kommunikationseinheit als Server Kontakt auf und kann über diesen auf die zweite Kommunikationseinheit (Client) zugreifen.

Die Zuordnungen "erste" Kommunikationseinheit und "zweite" Kommunikationseinheit sind willkürlich gewählt und können auch vertauscht werden. Bei Anwendung in Verbindung mit Fahrzeugen soll die erste Kommunikationseinheit stets Bestandteil der ersten Fahrzeugeinheit sein und die zweite Kommunikationseinheit Bestandteil der zweiten Fahrzeugeinheit. Die Existenz weiterer Fahrzeugeinheiten ist dadurch nicht ausgeschlossen. Es soll aber nach Abschluss der Konfiguration vorzugsweise nur eine Fahrzeugeinheit eine als Server arbeitende Kommunikationseinheit aufweisen.

Weitere Merkmale der Erfindung ergeben sich aus der Beschreibung im Übrigen und aus den Ansprüchen. Vorteilhafte Ausführungsbeispiele der Erfindung werden nachfolgend anhand von Zeichnungen näher erläutert. Es zeigen:
Fig. 1 ein System mit einer ersten Kommunikationseinheit, einer zweiten Kommunikationseinheit und einer mobilen Kommunikationseinheit zur Bildung eines drahtlosen Netzwerkes,
Fig. 2 das System gemäß Fig. 1 in Verbindung mit zwei Fahrzeugeinheiten und unter Bildung eines Fahrzeugnetzwerks,
Fig. 3 einen Ablaufplan zur Änderung der Konfiguration gemäß den Fig. 1 und 2.

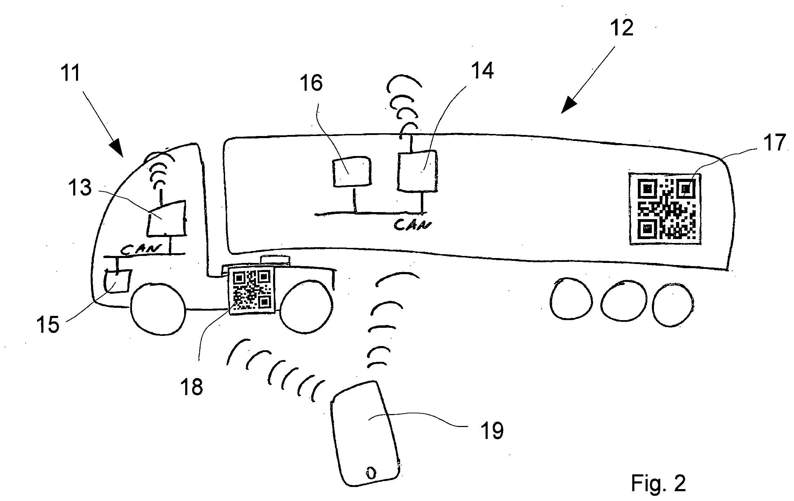

Ein Lastzug besteht in dem Beispiel der Fig. 2 aus zwei Fahrzeugeinheiten 11, 12. Die erste Fahrzeugeinheit 11 ist hier eine Zugmaschine und die zweite Fahrzeugeinheit 12 ein Sattelauflieger. Beide Fahrzeugeinheiten 11, 12 sind mit einem elektronischen Bremssystem und elektronischen Steuergeräten zur Ausführung und Steuerung verschiedenster Funktionen ausgestattet.

In der ersten Fahrzeugeinheit ist ein Steuergerät mit einer ersten Kommunikationseinheit 13 vorgesehen. Analog dazu weist die zweite Fahrzeugeinheit 12 ein Steuergerät mit einer zweiten Kommunikationseinheit 14 auf. Die Steuergeräte sind nicht extra eingezeichnet, können zusätzlich zu den Kommunikationseinheiten 13, 14 vorhanden sein oder aber mit diesen zusammen integriert ausgebildet sein.

Bei den Kommunikationseinheiten 13, 14 handelt es sich im vorliegenden Beispiel um Sender/Empfänger zum Aufbau und zum Betrieb einer WLAN-Verbindung. Die den Kommunikationseinheiten zugeordneten Steuergeräte sind an ein fahrzeugseitiges CAN-Datenbussystem angeschlossen, welches jeweils mit weiteren Steuergeräten 15, 16 verbunden sein kann.

Zur Herstellung einer WLAN-Verbindung sind bestimmte Parameter erforderlich. Ein WLAN-Client, der sich mit einem WLAN-Access-Point (Server) verbinden möchte, benötigt hierzu die Netzwerkkennung des Access-Points, Informationen über die Verschlüsselung und über das Passwort. Diese Parameter mit Bezug zur zweiten Fahrzeugeinheit 12 werden als Verbindungsaufbau-Daten bezeichnet und sind hier in optisch lesbarer Form am Fahrzeug angeordnet, nämlich als QR-Code 17. Analog dazu sind die Verbindungsaufbau-Daten für die erste Kommunikationseinheit 13 an der ersten Fahrzeugeinheit 11 angeordnet, nämlich als QR-Code 18.

Die Anbringungsorte der QR-Codes 17, 18 in Fig. 2 sind willkürlich gewählt. Die QR-Codes können auch anderer Stelle angeordnet sein. Sinnvoll ist eine leichte Erreichbarkeit der QR-Codes, um so eine hohe Benutzerfreundlichkeit zu gewährleisten. Vorzugsweise sind die QR-Codes zur Verhinderung von Missbrauch versteckt platziert, beispielsweise hinter einer verschlossenen Tür oder Klappe und/oder den Fahrzeugpapieren beigelegt.

Eine Bedienungsperson befindet sich mit einer mobilen Kommunikationseinheit, nämlich einem Smartphone 19 mit WLAN-Funktion außerhalb der Fahrzeugeinheiten 11, 12. Die Fahrzeugeinheiten 11, 12 stehen still. Die Bedienungsperson möchte Daten aus beiden Fahrzeugeinheiten 11, 12 abfragen und anschließend Funktionen der Fahrzeugeinheiten 11, 12 über das Smartphone 19 fernsteuern. Beispielsweise handelt es sich um die Funktion einer pneumatischen Niveauregelung oder um die Bewegung einer Hubladebühne oder das Heben und Senken einer Liftachse. Vermieden werden soll der wechselseitige Zugriff auf verschiedene Netzwerke.

Erforderlich ist der Aufbau eines WLAN-Netzwerks mit einem Server und mehreren Clients. Das Smartphone 19 ist als Client konfiguriert und soll in der genannten Weise auf die Kommunikationseinheiten 13, 14 der Fahrzeugeinheiten 11, 12 zugreifen. Die beiden Kommunikationseinheiten 13, 14 sind als Server (Access-Points) vorkonfiguriert und spannen jeweils ein eigenes Netzwerk auf.

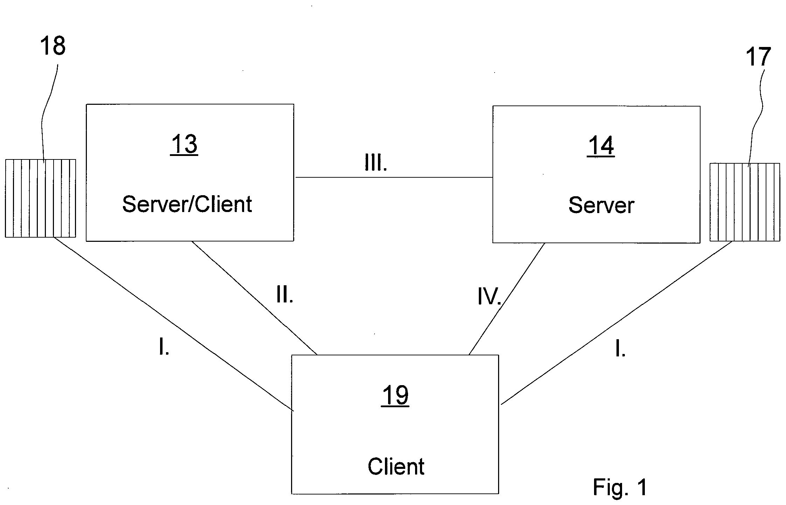

In Fig. 1 ist das Netzwerk in allgemeiner Form und/oder zur Vereinfachung der Darstellung nur mit den Kommunikationseinheiten und den QR-Codes 17, 18 dargestellt.

In einem ersten Schritt, siehe I. der Ziffernfolgen I., II., III. und IV. in Fig. 1, erfasst die Bedienungsperson mit dem Smartphone 19 über eine Kamera mit entsprechender Software die beiden QR-Codes 17, 18 mit den Verbindungsaufbau-Daten für beide Kommunikationseinheiten 13, 14.

In einem zweiten Schritt (II. in Fig. 1) kontaktiert das Smartphone 19 als Client die erste Kommunikationseinheit 13 als Access-Point unter Verwendung der Verbindungsaufbau-Daten aus dem QR-Code 18 und überträgt dabei auch die Verbindungsaufbau-Daten aus dem QR-Code 17. Zugleich überträgt das Smartphone 19 an die erste Kommunikationseinheit 13 Steuerbefehle, welche die Anweisungen beinhalten, dass die erste Kommunikationseinheit 13 in einen Grundzustand ohne Server-Eigenschaft herunterfährt und sich anschließend in einem dritten Schritt (III. in Fig. 1) als Client in das Netzwerk der zweiten Kommunikationseinheit 14 einbucht.

Das Smartphone 19 ist selbst ebenfalls Client im drahtlosen Netzwerk der zweiten Kommunikationseinheit 14 und kann nun in einem vierten Schritt (IV. in Fig. 1) über die Kommunikationseinheit 14 auch auf die Kommunikationseinheit 13 und auf die Daten der Fahrzeugeinheiten 11, 12 zugreifen. Dabei hält das Smartphone 19 nur zu einem Server eine Verbindung, nämlich zur zweiten Kommunikationseinheit 14. Je nach Funktionalität der zugeordneten Steuergeräte (und ihrer Software) und der auf dem Smartphone 19 installierten Software können auch Funktionen beider Fahrzeugeinheiten 11, 12 mittels des Smartphones 19 gesteuert werden.

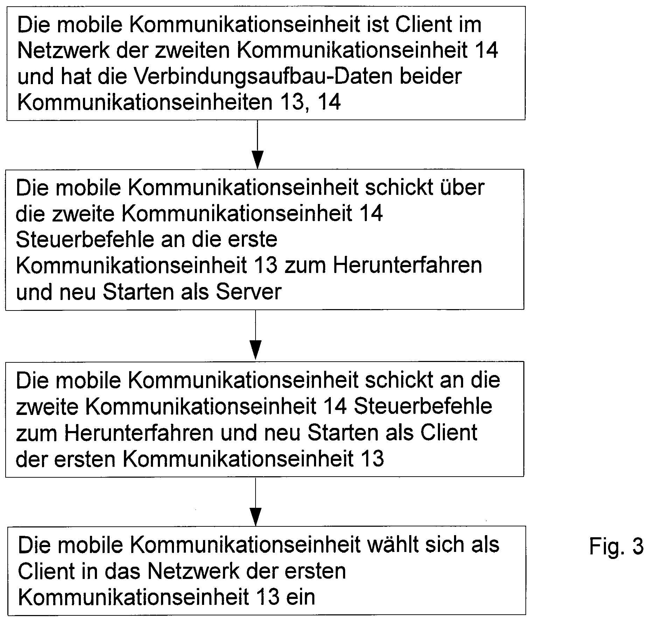

Zugfahrzeuge und Anhängefahrzeuge können voneinander getrennt werden bzw. wechseln. Auch können zwei oder mehr Anhängefahrzeuge aneinandergekoppelt werden. Es kann deshalb sinnvoll sein eine einmal eingerichtete Konfiguration einer Kommunikationseinheit als Server zu ändern und diese Kommunikationseinheit neu als Client zu konfigurieren. Entsprechend übernimmt dann eine andere Kommunikationseinheit die Serverfunktion. Dies wird am Beispiel der Fig. 2 und in Verbindung mit Fig. 3 erläutert.

Ausgehend von der zuvor dargestellten Konfiguration ist es das Ziel, die erste Kommunikationseinheit 13 in der Zugmaschine als Server zu konfigurieren und die zweite Kommunikationseinheit 14 im Anhängefahrzeug als Client. Das Smartphone 19 und die erste Kommunikationseinheit 13 sind Clients im Netzwerk der zweiten Kommunikationseinheit 14. Über das Netzwerk sendet das Smartphone 19 Steuerbefehle an die erste Kommunikationseinheit 13. Die Steuerbefehle beinhalten, dass die erste Kommunikationseinheit 13 seinen Status als Client beendet oder in einen Grundzustand ohne Status herunterfährt und anschließend in den standardmäßig vorgegebenen Status als Server wieder hochfährt. Die beiden Kommunikationseinheiten 13, 14 sind nun beide wieder Server.

In einem weiteren Schritt sendet das Smartphone 19 Steuerbefehle an die zweite Kommunikationseinheit 14, damit letztere in einen Grundzustand ohne Status herunterfährt und als Client der ersten Kommunikationseinheit 13 wieder hochfährt. Das Smartphone 19 versendet hierzu die Verbindungsaufbau-Daten der ersten Kommunikationseinheit 13 an die zweite Kommunikationseinheit 14.

Das Smartphone 19 wählt sich anschließend als Client in das Netzwerk der ersten Kommunikationseinheit 13 ein.

Im vorliegenden Beispiel ist die Zugmaschine rein willkürlich als erste Fahrzeugeinheit 11 ausgewählt. Die Reihenfolge kann auch umgekehrt gegeben sein, mit der Zugmaschine als zweiter Fahrzeugeinheit und mit zweiter Kommunikationseinheit.

Anstelle der WLAN-Funktechnik kann auch eine andere drahtlose Übertragungstechnik zur Anwendung kommen, soweit diese einen Client-Server-Betrieb ermöglicht, beispielsweise die bekannte Bluetooth-Funktechnik mit einem Master als Server und Slaves als Clients. Gleiches gilt für andere drahtlose Übertragungstechniken.

## Patentansprüche

1. Verfahren zum Aufbau und zum Betrieb eines drahtlosen Netzwerks mit wenigstens einer ersten Kommunikationseinheit (13), einer zweiten Kommunikationseinheit (14) und einer mobilen Kommunikationseinheit, mit folgenden Schritten:
a) die erste Kommunikationseinheit (13) und die zweite Kommunikationseinheit (14) sind jeweils als Server konfiguriert und die mobile Kommunikationseinheit ist als Client konfiguriert,
b) die mobile Kommunikationseinheit erfasst Verbindungsaufbau-Daten der beiden Kommunikationseinheiten (13, 14),
c) von der mobilen Kommunikationseinheit wird eine drahtlose Verbindung zur ersten Kommunikationseinheit (13) hergestellt,
d) die erste Kommunikationseinheit (13) erhält von der mobilen Kommunikationseinheit über die drahtlose Verbindung eine Anweisung zur Konfiguration als Client der zweiten Kommunikationseinheit (14), hierzu übergibt die mobile Kommunikationseinheit die Verbindungsaufbau-Daten der zweiten Kommunikationseinheit (14) an die erste Kommunikationseinheit (13),
e) spätestens danach wird von der mobilen Kommunikationseinheit eine drahtlose Verbindung zur zweiten Kommunikationseinheit (14) hergestellt.

2. Verfahren nach Anspruch 1, **dadurch gekennzeichnet, dass** nach einem Abriss der drahtlosen Verbindung zwischen der ersten Kommunikationseinheit (13) als Client und der zweiten Kommunikationseinheit (14) als Server die erste Kommunikationseinheit (13) ihren Zustand als Client beendet und als Server neu startet.

3. Verfahren nach Anspruch 1 oder 2, **dadurch gekennzeichnet, dass** die mobile Kommunikationseinheit nach dem Erfassen der Verbindungsaufbau-Daten der zweiten Kommunikationseinheit (14) eine Verbindung zur zweiten Kommunikationseinheit (14) aufbaut, zur Überprüfung der Verbindungsaufbau-Daten, der Aktivität und des Status der zweiten Kommunikationseinheit (14) als Server.

4. Verfahren Anspruch 1 oder einem der Ansprüche 2 und 3, **dadurch gekennzeichnet, dass** die Client-Server-Verbindungen Bluetooth-Verbindungen sind, mit dem Server als Master.

5. Verfahren nach Anspruch 1 oder einem der weiteren Ansprüche, **dadurch gekennzeichnet, dass** die Verbindungsaufbau-Daten eine Kennung der zugehörigen Kommunikationseinheit (13, 14) umfassen und auch ein Passwort und/oder Angaben zur Verschlüsselung.

6. Verfahren nach Anspruch 1 oder einem der weiteren Ansprüche, **dadurch gekennzeichnet, dass** die Verbindungsaufbau-Daten zumindest einer der beiden Kommunikationseinheiten (13, 14) als optisch erkennbares Muster bereitgehalten und von der mobilen Kommunikationseinheit gelesen werden, als QR-Code, Data-Matrix-Code oder als Strich-Code.

7. Verfahren nach Anspruch 1 oder einem der weiteren Ansprüche, **dadurch gekennzeichnet, dass** die Verbindungsaufbau-Daten als per Funk übertragbare oder abrufbare Daten bereit gehalten und von der mobilen Kommunikationseinheit gelesen werden, zur Übertragung durch WPS, NFC, Bluetooth oder RFID.

8. System für den Aufbau und Betrieb eines drahtlosen Netzwerks,
mit wenigstens einer ersten Kommunikationseinheit (13), welcher Verbindungsaufbau-Daten zugeordnet sind,
einer zweiten Kommunikationseinheit (14), welcher Verbindungsaufbau-Daten zugeordnet sind,
und einer mobilen Kommunikationseinheit, welche eine Funktion zum Lesen von Verbindungsaufbau-Daten aufweist,
wobei zumindest die erste Kommunikationseinheit (13) wahlweise als Server oder Client im Netzwerk betreibbar ist,
wobei die zweite Kommunikationseinheit (14) zumindest als Server im Netzwerk betreibbar ist,
wobei die den beiden Kommunikationseinheiten (13, 14) zugeordneten Verbindungsaufbau-Daten von der mobilen Kommunikationseinheit lesbar sind,
wobei mittels der mobilen Kommunikationseinheit als Client und unter Verwendung der Verbindungsaufbau-Daten der ersten Kommunikationseinheit (13) eine drahtlose Verbindung zur ersten Kommunikationseinheit (13) als Server herstellbar ist,
wobei von der mobilen Kommunikationseinheit als Client und unter Verwendung der Verbindungsaufbau-Daten der zweiten Kommunikationseinheit (14) die erste Kommunikationseinheit (13) zum Client der als Server betriebenen zweiten Kommunikationseinheit (14) umkonfigurierbar ist,
und wobei von der mobilen Kommunikationseinheit als Client eine Verbindung zur als Server betriebenen zweiten Kommunikationseinheit (14) herstellbar ist.

9. System nach Anspruch 8, **dadurch gekennzeichnet, dass** die erste Kommunikationseinheit (13) einem ersten Steuergerät einer ersten Fahrzeugeinheit (11) zugeordnet ist,
und dass die zweite Kommunikationseinheit (14) einem zweiten Steuergerät einer zweiten Fahrzeugeinheit (12) zugeordnet ist.

10. System nach Anspruch 8 oder 9, **dadurch gekennzeichnet, dass** die mobile Kommunikationseinheit ein portabler Computer ist.

11. System nach Anspruch 8 oder einem der weiteren Ansprüche 9 oder 10, **dadurch gekennzeichnet, dass** die mobile Kommunikationseinheit einen Scanner oder eine Kamera mit einer Software zum Auswerten von Bildern aufweist, insbesondere eine Funktion zum Lesen von QR-Codes, Data-Matrix-Codes oder StrichCodes.

12. System nach Anspruch 8 oder einem der weiteren Ansprüche 9 bis 11, **dadurch gekennzeichnet, dass** die mobile Kommunikationseinheit WLAN-fähig oder Bluetooth-fähig ist.

13. Elektronisches Steuergerät für die Verwendung in einem System nach einem der Ansprüche 8 bis 12, mit einer Kommunikationseinheit (13, 14), welche wahlweise als Client oder Server für eine drahtlose Client-Server-Verbindung konfigurierbar ist.

14. Steuergerät nach Anspruch 13 **gekennzeichnet durch** eine Schnittstelle für ein Datenbus-System, insbesondere für ein CAN-Bussystem.

## Claims

1. Method for setting up and operating a wireless network with at least a first communication unit (13), a second communication unit (14) and a mobile communication unit, with the following steps:
a) the first communication unit (13) and the second communication unit (14) are configured in each case as a server and the mobile communication unit is configured as a client,
b) the mobile communication unit acquires connection set-up data of the two communication units (13, 14),
c) a wireless connection is set up from the mobile communication unit to the first communication unit (13),
d) the first communication unit (13) receives an instruction from the mobile communication unit via the wireless connection for configuration as a client of the second communication unit (14), for which purpose the mobile communication unit transfers the connection set-up data of the second communication unit (14) to the first communication unit (13),
e) at the latest thereafter, a wireless connection is set up from the mobile communication unit to the second communication unit (14).

2. Method according to Claim 1, **characterized in that**, following an interruption of the wireless connection between the first communication unit (13) as a client and the second communication unit (14) as a server, the first communication unit (13) ends its status as a client and restarts as a server.

3. Method according to Claim 1 or 2, **characterized in that** the mobile communication unit, after acquiring the connection set-up data of the second communication unit (14), sets up a connection to the second communication unit (14) in order to verify the connection set-up data, the activity and the status of the second communication unit (14) as a server.

4. Method according to Claim 1 or either of Claims 2 and 3, **characterized in that** the client-server connections are Bluetooth connections, with the server as the master.

5. Method according to Claim 1 or one of the further claims, **characterized in that** the connection set-up data comprise an identifier of the associated communication unit (13, 14) and also a password and/or encryption data.

6. Method according to Claim 1 or one of the further claims, **characterized in that** the connection set-up data of at least one of the two communication units (13, 14) are made available as an optically recognizable pattern and are read by the mobile communication unit, in particular as a QR code, a data matrix code or as a barcode.

7. Method according to Claim 1 or one of the further claims, **characterized in that** the connection set-up data can be made available as data that are transmittable or retrievable by radio and are read by the mobile communication unit for transmission by means of WPS, NFC, Bluetooth or RFID.

8. System for setting up and operating a wireless network
with at least a first communication unit (13) to which connection set-up data are allocated,
a second communication unit (14) to which connection set-up data are allocated,
and a mobile communication unit which has a function for reading connection set-up data,
wherein at least the first communication unit (13) is operable as either a server or a client in the network, wherein the second communication unit (14) is operable at least as a server in the network,
wherein the connection set-up data allocated to the two communication units (13, 14) are readable by the mobile communication unit,
wherein, by means of the mobile communication unit as a client and using the connection set-up data of the first communication unit (13), a wireless connection can be set up to the first communication unit (13) as a server, wherein, from the mobile communication unit as a client and using the connection set-up data of the second communication unit (14), the first communication unit (13) is reconfigurable to the client of the second communication unit (14) operated as a server,
and wherein, from the mobile communication unit as a client, a connection can be set up to the second communication unit (14) operated as a server.

9. System according to Claim 8, **characterized in that** the first communication unit (13) is allocated to a first control unit of a first vehicle unit (11),
and **in that** the second communication unit (14) is allocated to a second control unit of a second vehicle unit (12).

10. System according to Claim 8 or 9, **characterized in that** the mobile communication unit is a portable computer.

11. System according to Claim 8 or either of the further Claims 9 and 10, **characterized in that** the mobile communication unit has a scanner or a camera with software for evaluating images, in particular a function for reading QR codes, data matrix codes or barcodes.

12. System according to Claim 8 or one of the further Claims 9 to 11, **characterized in that** the mobile communication unit is WLAN-enabled or Bluetooth-enabled.

13. Electronic control unit for use in a system according to one of Claims 8 to 12, with a communication unit (13, 14) which is configurable as either a client or a server for a wireless client-server connection.

14. Control unit according to Claim 13, **characterized by** an interface for a data bus system, in particular for a CAN bus system.

## Revendications

1. Procédé pour établir et faire fonctionner un réseau sans fil comprenant au moins une première unité de communication (13), une deuxième unité de communication (14) et une unité de communication mobile, comprenant les étapes suivantes :
a) la première unité de communication (13) et la deuxième unité de communication (14) sont respectivement configurées en tant que serveur et l'unité de communication est configurée en tant que client,
b) l'unité de communication mobile acquiert des données d'établissement de liaison des deux unités de communication (13, 14),
c) une liaison sans fil est établie de l'unité de communication mobile vers la première unité de communication (13),
d) la première unité de communication (13) reçoit, de la part de l'unité de communication mobile par le biais de la liaison sans fil, une instruction de configuration en tant que client de la deuxième unité de communication (14), l'unité de communication mobile délivre à cet effet les données d'établissement de liaison de la deuxième unité de communication (14) à la première unité de communication (13),
e) une liaison sans fil avec la deuxième unité de communication (14) est créée au plus tard après cela par l'unité de communication mobile.

2. Procédé selon la revendication 1, **caractérisé en ce qu'**après une rupture de la liaison sans fil entre la première unité de communication (13) en tant que client et la deuxième unité de communication (14) en tant que serveur, la première unité de communication (13) met fin à son état de client et redémarre en tant que serveur.

3. Procédé selon la revendication 1 ou 2, **caractérisé en ce que** l'unité de communication mobile, après avoir acquis les données d'établissement de liaison de la deuxième unité de communication (14), établit une liaison avec la deuxième unité de communication (14) en vue de vérifier les données d'établissement de liaison, l'activité et l'état de la deuxième unité de communication (14) en tant que serveur.

4. Procédé selon la revendication 1 ou l'une des revendications 2 et 3, **caractérisé en ce que** les liaisons client-serveur sont des liaisons Bluetooth, avec le serveur en tant que maître.

5. Procédé selon la revendication 1 ou l'une des autres revendications, **caractérisé en ce que** les données d'établissement de liaison comportent un identificateur de l'unité de communication (13, 14) associée ainsi qu'un mot de passe et/ou des indications à propos du cryptage.

6. Procédé selon la revendication 1 ou l'une des autres revendications, **caractérisé en ce que** les données d'établissement de liaison d'au moins l'une des deux unités de communication (13, 14) sont mises à disposition sous la forme d'un modèle reconnaissable optiquement et sont lues par l'unité de communication mobile sous la forme d'un code QR, d'un code Datamatrix ou d'un code à barres.

7. Procédé selon la revendication 1 ou l'une des autres revendications, **caractérisé en ce que** les données d'établissement de liaison sont fournies en tant que données transmissibles ou invocables par voie radioélectrique et sont lues par l'unité de communication mobile en vue de la transmission par WPS, NFC, Bluetooth ou RFID.

8. Système pour établir et faire fonctionner un réseau sans fil,
comprenant au moins une première unité de communication (13) à laquelle sont attribuées des données d'établissement de liaison,
une deuxième unité de communication (14) à laquelle sont attribuées des données d'établissement de liaison,
et une unité de communication mobile, laquelle possède une fonction de lecture de données d'établissement de liaison,
au moins la première unité de communication (13) pouvant fonctionner, au choix, en tant que serveur ou client dans le réseau,
la deuxième unité de communication (14) pouvant au moins fonctionner en tant que serveur dans le réseau,
les données d'établissement de liaison attribuées aux deux unités de communication (13, 14) pouvant être lues par l'unité de communication mobile,
une liaison sans fil pouvant être établie vers la première unité de communication (13) en tant que serveur au moyen de l'unité de communication mobile en tant que client et en utilisant les données d'établissement de liaison de la première unité de communication (13),
la première unité de communication (13) pouvant être reconfigurée en client de la deuxième unité de communication (14) fonctionnant en tant que serveur par l'unité de communication mobile en tant que client et en utilisant les données d'établissement de liaison de la deuxième unité de communication (14),
et une liaison avec la deuxième unité de communication (14) fonctionnant en tant que serveur pouvant être créée par l'unité de communication mobile en tant que client.

9. Système selon la revendication 8, **caractérisé en ce que** la première unité de communication (13) est associée à un premier contrôleur d'une première unité de véhicule (11),
et **en ce que** la deuxième unité de communication (14) est associée à un deuxième contrôleur d'une deuxième unité de véhicule (12).

10. Système selon la revendication 8 ou 9, **caractérisé en ce que** l'unité de communication mobile est un ordinateur portable.

11. Système selon la revendication 8 ou l'une des autres revendications 9 et 10, **caractérisé en ce que** l'unité de communication mobile possède un terminal de lecture ou une caméra comprenant un logiciel pour interpréter des images, notamment une fonction de lecture de codes QR, de codes Datamatrix ou de codes à barres.

12. Système selon la revendication 8 ou l'une des autres revendications 9 à 11, **caractérisé en ce que** l'unité de communication mobile est compatible WLAN ou est compatible Bluetooth.

13. Contrôleur électronique pour l'utilisation dans un système selon l'une des revendications 8 à 12, comprenant une unité de communication (13, 14) qui peut être configurée, au choix, en tant que client ou serveur pour une liaison client-serveur sans fil.

14. Contrôleur selon la revendication 13, **caractérisé par** une interface pour un système de bus de données, notamment pour un système de bus CAN.
